# EUROPEAN PATENT SPECIFICATION

(11) **EP 3 860 863 B1**
(45) Date of publication and mention of the grant of the patent: **21.08.2024**
(21) Application number: 19821444.7
(22) Date of filing: 02.10.2019
(51) Int. Cl.: B42D 25/455, B42D 25/46, B42D 25/47, B42D 25/29, B42D 25/328, B42D 25/378, B32B 37/00, B44C 1/17

(54) **METHOD FOR CREATING A SECURITY ELEMENT ON SECURITY DOCUMENTS AND SECURITY DOCUMENT CONTAINING SECURITY ELEMENT**
VERFAHREN ZUR HERSTELLUNG EINES SICHERHEITSELEMENTS AUF SICHERHEITSDOKUMENTEN UND SICHERHEITSELEMENT ENTHALTENDES SICHERHEITSDOKUMENT
PROCÉDÉ DE CRÉATION D'UN ÉLÉMENT DE SÉCURITÉ SUR DES DOCUMENTS DE SÉCURITÉ ET DOCUMENT DE SÉCURITÉ CONTENANT UN ÉLÉMENT DE SÉCURITÉ

(30) Priority: 04.10.2018 HU 1800340
(43) Date of publication of application: 11.08.2021
(73) Proprietor: Any Biztonsági Nyomda Nyrt, 1102 Budapest (HU)
(72) Inventor: VERESS, Zoltán, 1194 Budapest (HU); SZÁNTAY, Gergely, 1112 Budapest (HU); SZAMPER, Károly, 1194 Budapest (HU)
(74) Representative: Kovári, Zoltán
(86) International application number: PCT/HU2019/050044
(87) International publication number: WO 2020/070528

(56) References cited:
- WO-A2-2012/159871
- WO-A2-2017/076872
- GB-A- 2 220 386

## Description

### The field of the invention

The present invention relates to a method with which a security element may be created on security documents, particularly passports, which security element contains at least two foils partially overlapping each other, which is applied using hot stamping in such a way that the register precision is maintained at +/- 0.4 mm. The invention also relates to a security document produced using the method.

### The state of the art

Security documents need to be provided with security elements in the interest of preventing them being forged. Security elements produced with high precision and that require the use of special identification equipment, or a combination of these features, are usually used in the interest of preventing forgery.

In addition it is necessary to produce and affix the security elements in compliance with aesthetic considerations as the security documents represent the authorities issuing them, especially in the case of passports they also influence the image formed of the given country.

In the case of security documents, particularly passports, hot stamping has been used with success for some time, which serve both decoration and security purposes, particularly on the cover of the security document.

Hot stamping is a type of letterpress printing, which is adapted for producing particularly decorative printing industry products. In brief, during the simplest implementation of hot stamping the usually heated stamping tool (which carries the pattern to be printed) presses the hot stamping foil containing dry ink or a metal layer and adhesive onto the work piece. After stamping the head is raised and the device replaces the work piece for a new one, while moving the hot stamping foil to the desired extent, and then the device is ready for a new cycle. Details of hot stamping may be found in, for example, Nyomdaipari Enciklopédia [Printing Industry Encyclopaedia] (M 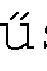 szaki Könyvkiadó, Budapest, 1977. pages 632-634).

The disadvantage of the above hot stamping method is that the simple graphic material is easy to reproduce, and prints may be made that are confusingly similar to the original using hot stamping presses that are accessible without limitation. In other words it is easy to forge decorative and/or security elements produced with the above hot stamping method.

Patent document number U.S. 5,186,787 discloses a foil adapted for hot stamping. Accordingly, a foil built up from five layers is most frequently used, which five layers in the direction from the stamping tool to the document are the following: a carrier layer, a separation layer (these two layers come off the document after stamping), a protective layer, a decoration layer, and a heat-activated adhesive layer. The disadvantage of this foil is that when performing a further hot stamping step on a surface already hot stamped, the hot stamping tool may lift up the previous hot stamped impression from the surface during the second stamping cycle. Also single-foil patterns are easy to reproduce using the hot stamping presses commercially available.

The hot stamping foil may be combined with various security elements, for example by using a further liquid crystal layer. In this way, depending on the position of observation, the colour of the foil changes for the observer, as disclosed in patent document number GB2357061A. Foils using a liquid crystal layer are more difficult to reproduce, and so are more difficult to forge, however, they are significantly more expensive.

Patent document number CN202563805 discloses a combination with a security-enhancing element, where random-like patterns are formed from fibres in the one layer, then by storing this pattern in a database the authenticity of a given document may be checked later on at any time. The disadvantage of this security element is that the check is expensive, as, on the one hand, it is necessary to have equipment available that is capable of reading the pattern, and this equipment must contain the pattern database, or it must provide online access to it.

As mentioned above the problem occurring in the case of applying a new layer with a further hot stamping step onto a surface already stamped is that during the second stamping process the stamping tool may lift the previous hot stamped impression from the surface. The result of this is an increase in the number of faulty, ripped products, which is unacceptable, particularly in the case of security documents.

This problem is solved by the solution according to patent document number EP3274183 by layers being applied to each other using intaglio or screen printing, then the lower layer visible from under the top layer is removed by etching. The role of the first layer in this solution is setting the colour of the pattern, the second layer sets the shape of the pattern, therefore, the second layer must cover the first layer at every point. However, the advantages of the use of several layers cannot be exploited, the individual layers only determine the colour or shape of the pattern. In addition, an etching agent has to be used to remove the first layer, which makes the process more complex and more dangerous for the workers and the environment.

Patent document WO 2012/159871 A2 discloses a hot stamping method, which can hot stamp one or more foil(s) to a substrate.

Patent document GB2220386 A discloses a hot stamping method, which is capable to hot stamp a foil with diffractive colours, and another foil is hot stamped on that foil or on the substrate with another diffractive colour.

Patent document WO2017/076872 A2 discloses a method, where at least one film applied to a surface of another film already applied to a substrate. The films are applied by an embossing technique.

From the above it can be concluded that at present there is no method in existence with which suitably complex and aesthetic security elements can be applied to security documents by applying several layers.

### Brief description of the invention

The objective of the present invention is to provide a method capable of creating suitably complex and also aesthetic security elements on security documents consisting of several foils with a hot stamping process that enables the creation of decorative solutions.

The present invention is based on the recognition that several foils may be applied to security documents with a hot stamping process in such a way that the individual foils only partially overlap each other. Due to this at least one surface part of each foil remains visible, the surface combination of which deriving from the arrangement makes it significantly more difficult to forge security documents according to the present invention. The partial overlapping also ensures stronger adhesion, and so the problem of the foils lifting up in the case of multi-foil hot stamping can be minimised. Also the phenomenon of lifting may also be remedied with the selection of suitable adhesive and/or hot stamping parameters.

In accordance with the above method the present invention is defined in claim 1.

According to a preferred embodiment of the method according to the invention the register precision is +/- 0.2 mm.

According to another preferred embodiment of the method according to the invention at least one of the foils has at least five layers, which five layers in the direction starting from the stamping tool to the surface of the security document to be supplied with a security element are the following: polyester layer, separation layer, transparent protective layer, metallised layer and adhesive layer, of which the first two layers are not applied to the document during the implementation of the method according to the invention.

According to an even more preferred embodiment of this method the adhesive layer of the foil contains 0.1-2 g/m² 1,4-cyclohexanedimethanol dibenzoate, preferably 0.3-0.6 g/m² 1,4-cyclohexanedimethanol dibenzoate.

According to another preferred embodiment of the method according to the invention the hot stamping temperature during the hot stamping of the first foil is between 140-200 °C, preferably 160-180 °C, depending on the quality of the surface to be hot stamped.

According to another preferred embodiment of the method according to the invention the hot stamping temperature during the hot stamping of the second and, optionally, other foils is between 60-100 °C, preferably between 75-85 °C, depending on the quality of the surface to be hot stamped.

According to another preferred embodiment of the method according to the invention the pressure used during the hot stamping of the first foil is between 100-220 bar, preferably between 120-160 bar, depending on the quality of the surface to be hot stamped.

According to another preferred embodiment of the method according to the invention the pressure used during the hot stamping of the second and, optionally, other foils is between 10-50 bar, preferably between 25-35 bar.

According to another preferred embodiment of the method according to the invention the holding time used during the hot stamping of the first foil is 0.1-2 sec, preferably 0.3-0.6 sec. According to another preferred embodiment of the method according to the invention the holding time used during the hot stamping of the second and possibly other foils is 0.1-1 sec, preferably 0.15-0.3 sec.

According to another preferred embodiment of the method according to the invention at least one of the foils contains one or more secondary security elements selected from among the following:
- layer providing a phenomenon based on light diffraction;
- fluorescent security elements;
- anti-Stokes pigments;
- infra-red fluorescent elements;
- iridescent pigments;
- metallic lustre pigments;
- pigments that change colour depending on the direction of illumination and viewing;
- photochromic pigments;
- thermochromic pigments.

The object of the invention also relates to a security document as defined in claim 12.

This specification further discloses a non-claimed hot stamping foil that has a polyester layer, a separation layer, a metallised layer and adhesive layer, which adhesive layer contains 1,4-cyclohexanedimethanol dibenzoate.

In the figures
Figure 1 shows an embodiment of the product according to the invention;
Figure 2 shows a front view of a first foil 3 indicated in figure 1 following hot stamping;
Figure 3 shows a front view of a second foil 4 indicated in figure 1 following hot stamping;
Figure 4 shows a preferred embodiment of a product according to the invention;
Figure 5 shows a front view of a first foil 3' indicated in figure 4 following hot stamping;
Figure 6 shows a front view of a second foil 4' marked in figure 4 following hot stamping;
Figure 7 shows a front view of a third foil 5' indicated in figure 4 following hot stamping.

### Detailed description of the invention

The essence of the security element created with the method according to the invention is that the position of the several foils as compared to each other and to the security document is within a given margin of error (the register precision is +/-0.4 mm), however, the forgers do not have this information and a forgery may be recognised if these positions fall outside of the margin of error in the case of a given security document. The partially overlapping, optionally differently shaped foils provide a great number of variation possibilities for defining the positions as compared to each other.

In the context of the present invention foil is understood to mean a foil that is adapted for use during hot stamping.

In the context of the present invention a security element is understood to mean an element placed on a security document that provides protection against forgery and contains at least two hot stamped foils partially overlapping each other.

In the context of the present invention security document is understood to mean all documents, certificates, papers that physically exist and that a forger could profit from counterfeiting, such as documents for proving identity, passports, travel passes, concert tickets, flight tickets, banknotes, etc.

In the context of the present invention register precision is understood to mean that precision of fit (tolerance limit) with which the two or more foils are positioned with respect to each other.

In the context of the present invention holding time is understood to mean the time during which the heated stamping tool presses the foil during the implementation of the hot stamping method.

In the context of the present invention secondary security element is understood to mean a layer providing a phenomenon based on light diffraction; fluorescent elements; anti-Stokes pigments; infrared fluorescent elements; iridescent pigments; metallic lustre pigments; pigments that change colour depending on the direction of illumination and viewing; photochromic pigments and thermochromic pigments.

In the context of the present invention a layer providing a phenomenon based on light diffraction (light bending) is understood to mean a layer primarily used for security purposes that breaks the light falling onto it up into colours, and that reflects the broken up light into different, specific directions in space. A particularly useful form of this from the point of view of security is provided by those devices (DOVID, i.e. Diffractive Optically Variable Imaging Device) that break up and reflect light in such a way that the observer sees an interpretable image.

In the context of the present invention fluorescent security elements are those materials, mixtures that react to the effect of exciting UV radiation with at least one of the following phenomena:
- fluorescing in a visible colour (mono-fluorescent pigments);
- fluorescing in different colours due to the effect of two types of UV radiation (UVA (365 nm) and UVB (313 nm), or UVA (365 nm) and UVC (254 nm));
- fluorescing in different colours due to the effect of three types of UV radiation (UVA (365 nm), UVB (313 nm) and UVC (254 nm)).

These are preferably understood to mean mono-, bi-, and tri-fluorescent pigments and pigment mixtures.

In the context of the present invention anti-Stokes pigments are understood to mean those pigments that emit shorter wavelength radiation, characteristically but not exclusively visible radiation, due to the effect of longer, characteristically but not exclusively infrared wavelength radiation.

In the context of the present invention infrared fluorescent pigments are understood to mean those pigments that emit longer wavelength infrared radiation due to the effect of shorter, characteristically but not exclusively visible wavelength radiation.

In the context of the present invention iridescent pigments are understood to mean pigments that dominantly transmit the light incident on it (transparent), and partially reflect a small part of it after breaking it up into its colours.

In the context of the present invention metallic lustre pigments are understood to mean those pigments that reflect the light incident on them in a controlled way (similarly to metallic surfaces).

In the context of the present invention pigments that change colour depending on the direction of illumination and viewing are understood to mean those pigments that reflect a dominant part of the light incident on them so that the observer sees different colours depending on the direction of observation.

In the context of the present invention photochromic pigments are understood to mean those pigments that reversibly change their colour due to the effect of electromagnetic (characteristically but not exclusively ultraviolet) radiation.

In the context of the present invention thermochromic pigments are understood to mean those pigments that change their colour due to the effect of a change in temperature. The process may be reversible or irreversible.

In the context of the present invention other security elements are understood to mean parts of the security document in addition to the security element created with hot stamping and optionally containing secondary security elements that make the work of the forger difficult.

During the implementation of the method according to the present invention a foil is applied to the security document with hot stamping. As the next step another foil is placed on this foil is applied with hot stamping in such a way that the second foil partially overlaps the first.

This is understood to mean that either the second foil is placed completely onto the first foil, in this case the surface of the second foil is necessarily smaller than the surface of the first foil so that partial overlapping is realised. According to another solution falling within the scope of protection of the invention, the second foil also covers an area outside of the first foil and in this case the surface of the second foil may be smaller, the same size or even larger than that of the first foil. Naturally, in the first case it is not excluded that the first foil covers the entire surface of the security document. Nor is the case excluded when a separately applied protective layer, lacquer layer is placed between the two foils, or any separate layer is located between the two foils, and the second foil is placed onto that using hot stamping.

During the implementation of the method according to the present invention the register precision is adjusted to +/- 0.4 mm, preferably to +/- 0.2 mm, which is achieved by guiding the delimiting elements that control the movement of the sheets to the appropriate position using laser positioning, as is known to a person skilled in the art. In general, according to the state of the art register precision of +/- 0.5 mm is used.

Preferably an at least five-layer foil is selected, which five layers in the direction from the stamping tool to the surface of the security document to be supplied with a security element are the following: polyester layer, separation layer, transparent protective layer, metallised layer and adhesive layer, of which the first two layers are not applied to the security document, as is obvious for a person skilled in the art.

The tasks of the adhesive layer is to secure the foil to the surface of the security document to be supplied with a security element, the task of the metallised layer is to form the visual image of the print, the task of the transparent protective layer is to protect this visual image from scratches, cleaning agents, other external impacts, the task of the separation layer is the complete transfer of the functional layers from the carrier, and the role of this carrier is filled by the polyester layer.

Preferably in the case of the second, and optionally in the cases of other foils, the adhesive layer contains 1,4-cyclohexanedimethanol dibenzoate. This measure is based on the recognition that it may occur that the first, already hot stamped foil becomes damaged during the hot stamping of the second foil as a result of the repeated hot stamping. Damage to the already hot stamped foil may be avoided by reducing the hot stamping parameters, such as temperature, for which the activation temperature of the adhesive must also be reduced. It was surprising to experience that the additive 1,4-cyclohexanedimethanol dibenzoate is suitable for reducing the activation temperature of the adhesive.

The adhesive layer of the foil layer containing 1,4-cyclohexanedimethanol dibenzoate is produced by applying 1,4-cyclohexanedimethanol dibenzoate using a solvent-based flexo printing process to the adhesive layer of the foil known of in itself in such a way that the surface of the foil or a part of it is coated with an isopropanol solution of 1,4-cyclohexanedimethanol dibenzoate using a printing plate. The high tension isopropanol solvent evaporates from the surface almost immediately, while the 1,4-cyclohexanedimethanol dibenzoate diffuses into the substance of the adhesive. At the end of the process 0.1-2 g/m², preferably 0.3-0.6 g/m² 1,4-cyclohexanedimethanol dibenzoate may be found in the adhesive layer.

The use of the hot stamping foil containing the modified adhesive layer according to the above is preferred because the heat-activated adhesive layer of the currently commercially available foils cannot be activated at temperatures of 100 °C or below, and when further foil is applied to hot stamped foil using hot stamping, it is preferable to use a lower temperature, pressure and holding time to avoid causing any damage to the layer already hot stamped.

During the implementation of the hot stamping method according to the invention, in the case of hot stamping the first foil onto the security document the hot stamping temperature used is preferably selected to be 140-200 °C, even more preferably 160-180 °C depending on the quality of the surface to be hot stamped. Higher temperatures are required on rougher surfaces where the adhesive is secured less effectively.

During the hot stamping of the second and, optionally further foils the hot stamping temperature used is selected to be preferably between 60-100 °C, even more preferably 75-85 °C, depending on the quality of the surface to be hot stamped. Higher temperatures are required on rougher surfaces where the adhesive is secured less effectively.

During the hot stamping method, in the case of hot stamping the first foil onto the security document the pressure selected is preferably between 100-220 bar, even more preferably 120-160 bar, depending on the quality of the surface to be hot stamped. Higher pressures are required on rougher surfaces where the adhesive is secured less effectively.

During the hot stamping of the second and, optionally, further foils the pressure used is selected to be preferably between 10-50 bar, even more preferably 25-35 bar, depending on the quality of the surface to be hot stamped. Higher pressures are required on rougher surfaces where the adhesive is secured less effectively.

During the hot stamping method, in the case of hot stamping the first foil onto the security document the holding time used is preferably selected to be between 0.1-2 sec, even more preferably 0.3-0.6 sec, depending on the quality of the surface to be hot stamped. Longer holding times are required for rougher surfaces where the adhesive is secured less effectively.

During the hot stamping of the second and, optionally further foils the holding time used is preferably selected to be between 0.1-1 sec, even more preferably 0.15-0.3 sec, depending on the quality of the surface to be hot stamped. Longer holding times are required for rougher surfaces where the adhesive is secured less effectively.

Due to the partial overlapping according to the present invention the temperature, pressure and holding time parameters used in the cases of the individual hot stamping foils must be selected in consideration of the unevenness resulting from the two or more surfaces originating from the partial overlapping and from the layer thicknesses. Within the ranges disclosed above these factors may be taken into consideration by performing simple optimisation belonging to the mandatory knowledge of a person skilled in the art, and by producing and examining a number of experimental prints.

In the case of security documents, protection is the most important aspect, therefore the individual foils may be provided with secondary security elements. These secondary security elements may be layers containing light-diffraction based special effects, including devices (DOVID - Diffractive Optically Variable Imaging Device) using elements displaying image information (commonly imprecisely known as "holographic" elements); fluorescent security elements, preferably mono-, bi-, and tri-fluorescent pigments and pigment mixtures; anti-Stokes pigments; infrared fluorescent elements; iridescent pigments; metallic lustre pigments; pigments that change colour depending on the direction of illumination and viewing; photochromic pigments and thermochromic pigments.

These secondary security elements may be applied in any of the foil layers disclosed above, except for in the metallised layer, or they may even constitute an independent layer in the foil.

These secondary security elements may be used either independently or combined with each other, in the same layer or even in different layers within a foil or within different foils.

The security document according to the present invention is created using the method disclosed above.

The security document according to the invention contains two or more foils applied using hot stamping which display partial overlapping as compared to each other. The precision of the partial overlapping moves within a narrow range by suitably setting the register precision used. As forgers are not usually able to achieve this precision, and do not necessarily know which geometrical parameter precision they need to pay attention to, therefore the security document according to the invention is difficult to forge, in other words a forged product is easy to identify.

This specification further discloses a non-claimed hot stamping foil, which has a polyester layer, separation layer, metallised layer and adhesive layer, which latter layer contains 1,4-cyclohexanedimethanol dibenzoate.

The task of the adhesive layer is to secure the foil to the surface of the security document to be provided with security elements, the task of the metallised layer is to form the visual image of the print, the task of the separation layer is the complete transfer of the functional layers from the carrier, and the role of this carrier is filled by the polyester layer.

The adhesive layer of the foil layer containing 1,4-cyclohexanedimethanol dibenzoate is produced by applying 1,4-cyclohexanedimethanol dibenzoate using a solvent-based flexo printing process to the adhesive layer of the foil known of in itself in such a way that the surface of the foil or a part of it is coated with an isopropanol solution of 1,4-cyclohexanedimethanol dibenzoate using a printing plate. The high tension isopropanol solvent evaporates from the surface almost immediately, while the 1,4-cyclohexanedimethanol dibenzoate diffuses into the substance of the adhesive. At the end of the process 0.1-2 g/m², preferably 0.3-0.6 g/m² 1,4-cyclohexanedimethanol dibenzoate may be found in the adhesive layer.

By modifying the adhesive layer the activation temperature of the adhesive drops. This makes the method more cost-effective and also makes the foil suitable for being applied to heat-sensitive surfaces, or makes it possible to perform the hot stamping on surfaces that have already been hot stamped. As in the case of a hot stamped surface repeating the hot stamping at the same temperature may cause damage to the lower hot stamped layer.

### Examples

### Example 1:

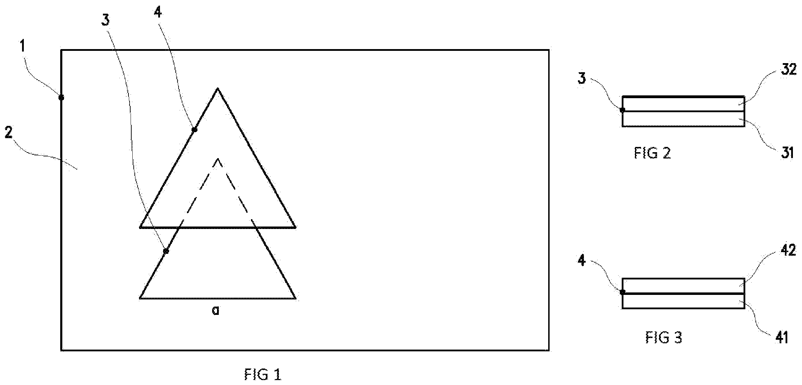

This example relates to the passport security document shown in figures 1, 2 and 3.

A triangular shaped, four-layer first foil 3 is applied to the cover 2 of a passport 1, as security document, using hot stamping, which four layers in the direction from the stamping tool to the cover 2 of the passport 1 are the following: polyester layer, separation layer, metallised layer 32 and adhesive layer 31.

The hot stamping parameters used during the hot stamping of the first foil 3:
- register precision +/- 0.4 mm;
- hot stamping temperature 170 °C +/-3 °C;
- pressure 140 bar +/- 5 bar;
- holding time 0.5 sec +/- 0.1 sec.

A triangular shaped, four-layer second foil 4 is placed on the first foil 3 using hot stamping. The four layers of the second foil 4 in the direction from the stamping tool to the cover 2 of the passport 1 are the following: polyester layer, separation layer, metallised layer 42 and adhesive layer 41. The second foil 4 is placed on the surface of the first foil 3 parallel to side a and displaced, extending beyond the surface of the first foil 3 in the way shown in figure 1.

The hot stamping parameters used during the hot stamping of the second foil 4 are the same as the hot stamping parameters used in the case of the hot stamping of the first foil 3.

### Example 2:

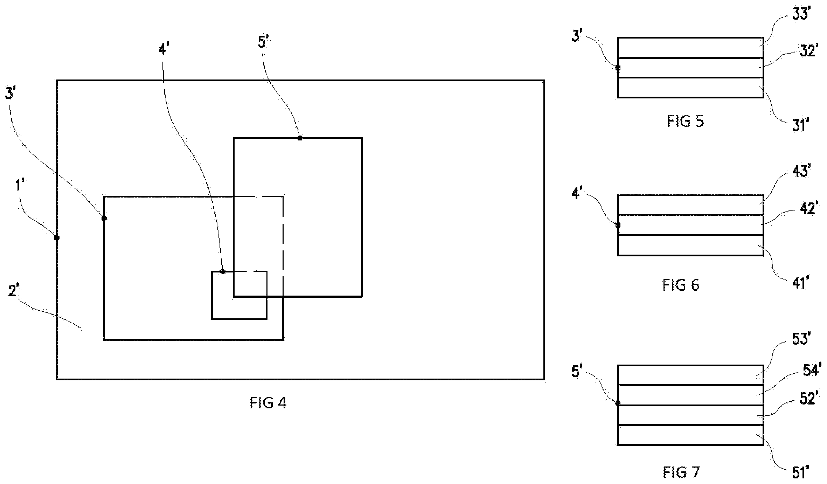

This example relates to the festival ticket security document shown in figures 4, 5, 6 and 7.

A square shaped, five-layer first foil 3' is applied to the cover 2' of a festival ticket 1' using hot stamping, which five layers in the direction from the stamping tool to the cover 2' of the festival ticket 1' are the following: polyester layer, separation layer, transparent protective layer 33', metallised layer 32' and adhesive layer 31'.

The hot stamping parameters used during the hot stamping of the first foil 3':
- register precision +/- 0.2 mm;
- hot stamping temperature 170 °C +/-3 °C;
- pressure 140 bar +/- 5 bar;
- holding time 0.5 sec +/- 0.1 sec.

A square shaped, five-layer second foil 4' is placed using hot stamping in such a way that it is positioned in the lower right corner of the surface of the first foil 3' in the way shown in the figure. The five layers of the foil in the direction from the stamping tool to the cover 2' of the festival ticket 1' are the following: polyester layer, separation layer, transparent protective layer 43', metallised layer 42' and adhesive layer 41'. The adhesive layer 41' of this second foil 4' contains 0.4-0.5 g/m² 1,4-cyclohexanedimethanol dibenzoate, and has a transparent protective layer 43' containing monofluorescent pigments as secondary security element.

While modifying the foil 4' 0.4-0.5 g/m² 1,4-cyclohexanedimethanol dibenzoate was applied to the adhesive layer 41' of the foil using a 3% by volume solution and a roller applying 15 ml/m², which ensured an optimal activation temperature of the adhesive of around 80 °C.

The hot stamping parameters used during the hot stamping of the second foil 4':
- register precision +/- 0.2 mm;
- hot stamping temperature 80 °C +/-3 °C;
- pressure 30 bar +/- 2 bar;
- holding time 0.2 sec +/- 0.05 sec.

A square shaped, six-layer third foil 5' is applied using hot stamping in such a way that the lower left corner of the third foil 5' is positioned on the second foil 4', and through this the right edge of the first foil 3' is also covered by the left edge of the third foil 5' in the way shown in the figure. The six layers of the foil 5' in the direction from the stamping tool to the cover 2' of the festival ticket 1' are the following: polyester layer, separation layer, transparent protective layer 53', layer containing iridescent pigments 54' as secondary security element, metallised layer 52' and adhesive layer 51', which adhesive layer 51' contains 0.4-0.5 g/m² 1,4-cyclohexanedimethanol dibenzoate.

The hot stamping parameters used during the hot stamping of the third foil 5' are the same as the hot stamping parameters used during the hot stamping of the second foil 4'.

The method and product according to the present invention are suitable for creating aesthetic and sufficiently complex surfaces on security documents, which are very complex for forgers to copy.

The great advantage of the present invention is that for all this known technology, hot stamping is used, and the hot stamping press and hot stamping foil required for this are commercially available, preferably with the adhesive layer of the foil being modified using the method disclosed above.

Another advantage of the present invention is that if necessary the complexity of the security element can be enhanced using secondary or other security elements, thereby increasing the level of protection of the security document.

Yet another advantage of the present invention is that in the case of certain preferred methods of implementation the authenticity of the security document may be verified with the naked eye. As a result of the hot stamping method realised according to the invention a print image is created that has a characteristic appearance that may be discerned with the naked eye due to the partial and/or complete overlapping of the several precisely positioned foils possibly of varying colour.

Security documents, primarily passport covers, may be produced at the industrial scale using this special method. The checking method is simple visual examination. The print image created as a result of the high-precision application largely depends on the register precision. A small displacement of the foils as compared to each other significantly influences the image created, which primarily changes the overall effect of the colours, furthermore the geometrical forms established due to the effect of the various colours and patterns may become distorted.

The personnel performing the checking can recognise these defects by simple visual inspection and this may induce a more thorough onsite and/or laboratory, expert examination. It should be noted that naturally not every secondary and/or other security element can be seen with the naked eye, special devices are needed to check for the existence of some secondary and/or other security elements. The checks of secondary and other security elements are known to a person skilled in the art.

Another advantage of the present invention is that in the case of its preferred embodiments, during the hot stamping of the second and, optionally further foils the values of the hot stamping parameters of temperature, pressure and holding time are much lower than those used during the hot stamping of the first foil, which makes the hot stamping of the second and further foils cheaper and faster.

Another advantage of the present invention is that after hot stamping all the foils onto the security document, the security document is ready for use. Naturally it is not excluded that in the case of the use of certain secondary and/or other security elements further steps need to be taken or time is required after the hot stamping for the security document to be completed.

## Claims

1. Method for creating security elements containing foil on security documents (1, 1') with hot stamping, wherein a first foil (3, 3') is applied to a security document (1, 1') using hot stamping, and onto that a second foil (4, 4') that partially overlaps it is also applied with hot stamping, and optionally one or more further foils (5') partially overlapping at least one of the previous foils are also applied using hot stamping, **characterized in that** the register precision, meaning the tolerance limit with which the two or more foils are positioned with respect to each other, used during the method is +/- 0.4 mm.

2. Method according to claim 1, **characterised by** that the register precision is +/- 0.2 mm.

3. Method according to claim 1 or 2, **characterised by** that at least the one foil has at least five layers, which five layers in the direction from the stamping tool to the surface of the security document to be supplied with a security element are the following: polyester layer, separation layer, transparent protective layer (33, 43, 33', 43', 53'), metallised layer (32, 42, 32', 42', 52') and adhesive layer (31, 41, 31', 41', 51').

4. Method according to claim 3, **characterised by** that the adhesive layer (41', 51') of the second and/or other foils (4', 5') contains 0.1-2 g/m² 1,4-cyclohexanedimethanol dibenzoate, preferably 0.3-0.6 g/m² 1,4-cyclohexanedimethanol dibenzoate.

5. Method according to any of claims 1 to 4, **characterised by** that the hot stamping temperature during the hot stamping of the first foil (3, 3') is between 140-200 °C, preferably between 160-180 °C.

6. Method according to any of claims 1 to 5, **characterised by** that the hot stamping temperature during the hot stamping of the second foil (4') and optionally further foils (5') is between 60-100 °C, preferably between 75-85 °C.

7. Method according to any of claims 1 to 6, **characterised by** that the pressure used during the hot stamping of the first foil (3, 3') is between 100-220 bar, preferably 120-160 bar.

8. Method according to any of claims 1 to 7, **characterised by** that the pressure used during the hot stamping of the second foil (4') and optionally of further foils (5') is between 10-50 bar, preferably 25-35 bar.

9. Method according to any of claims 1 to 8, **characterised by** that the holding time used during the hot stamping of the first foil (3, 3') is 0.1-2 sec, preferably 0.3-0.6 sec.

10. Method according to any of claims 1 to 9, **characterised by** that the holding time used during the hot stamping of the second foil (4') and optionally of further foils (5') is 0.1-1 sec, preferably 0.15-0.3 sec.

11. Method according to any of claims 1 to 10, **characterised by** that at least the one foil contains one or more secondary security elements selected from the following:
• a layer providing a phenomenon based on light diffraction;
• fluorescent security elements, preferably mono-, bi-, tri-fluorescent pigments and pigment mixtures;
• anti-Stokes pigments;
• infrared fluorescent elements;
• iridescent pigments, metallic lustre pigments, pigments that change colour depending on the direction of illumination and viewing;
• photochromic and thermochromic pigments.

12. Security document (1, 1') containing a security element created with hot stamping, **characterised by** that the security element is created with the method according to any of claims 1 to 11.

## Patentansprüche

1. Verfahren zur Herstellung von folienhaltigen Sicherheitselementen auf Sicherheitsdokumenten (1, 1') unter Verwendung von Heißprägen, wobei eine erste Folie (3, 3') unter Verwendung von Heißprägen auf ein Sicherheitsdokument (1, 1') aufgebracht wird und darauf eine zweite Folie (4, 4'), die diese teilweise überlappt, ebenfalls unter Verwendung von Heißprägen aufgebracht wird, und gegebenenfalls eine oder mehrere weitere Folien (5'), die mindestens eine der vorherigen Folien teilweise überlappen, ebenfalls unter Verwendung von Heißprägen aufgebracht werden, **dadurch gekennzeichnet, dass** die bei dem Verfahren verwendete Registergenauigkeit, d. h. die Toleranzgrenze, mit der die zwei oder mehr Folien in Bezug zueinander angeordnet sind, +/- 0,4 mm beträgt.

2. Verfahren nach Anspruch 1, **dadurch gekennzeichnet, dass** die Registergenauigkeit + /- 0,2 mm beträgt.

3. Verfahren nach Anspruch 1 oder 2, **dadurch gekennzeichnet, dass** mindestens die eine Folie mindestens fünf Schichten aufweist, wobei die fünf Schichten in die Richtung vom Prägewerkzeug zur Oberfläche des mit einem Sicherheitselement zu versehenden Sicherheitsdokuments die folgenden sind: Polyesterschicht, Trennschicht, transparente Schutzschicht (33, 43, 33', 43', 53'), metallisierte Schicht (32, 42, 32', 42', 52') und Klebeschicht (31, 41, 31', 41', 51').

4. Verfahren nach Anspruch 3, **dadurch gekennzeichnet, dass** die Klebeschicht (41', 51') der zweiten und/oder weiteren Folie(n) (4', 5') 0,1-2 g/m², 1,4-Cyclohexandimethanoldibenzoat, vorzugsweise 0,3-0,6 g/m² 1,4-Cyclohexandimethanoldibenzoat enthält.

5. Verfahren nach einem der Ansprüche 1 bis 4, **dadurch gekennzeichnet, dass** die Heißprägetemperatur beim Heißprägen der ersten Folie (3, 3') zwischen 140-200 °C, vorzugsweise zwischen 160-180 °C, liegt.

6. Verfahren nach einem der Ansprüche 1 bis 5, **dadurch gekennzeichnet, dass** die Heißprägetemperatur beim Heißprägen der zweiten Folie (4') und gegebenenfalls weiterer Folien (5') zwischen 60-100 °C, vorzugsweise zwischen 75-85 °C, liegt.

7. Verfahren nach einem der Ansprüche 1 bis 6, **dadurch gekennzeichnet, dass** der beim Heißprägen der ersten Folie (3, 3') verwendete Druck zwischen 100-220 bar, vorzugsweise 120-160 bar, liegt.

8. Verfahren nach einem der Ansprüche 1 bis 7, **dadurch gekennzeichnet, dass** der beim Heißprägen der zweiten Folie (4') und gegebenenfalls weiterer Folien (5') verwendete Druck zwischen 10-50 bar, vorzugsweise 25-35 bar, liegt.

9. Verfahren nach einem der Ansprüche 1 bis 8, **dadurch gekennzeichnet, dass** die verwendete Haltezeit beim Heißprägen der ersten Folie (3, 3') 0,1 bis 2 Sekunden, vorzugsweise 0,3 bis 0,6 Sekunden, beträgt.

10. Verfahren nach einem der Ansprüche 1 bis 9, **dadurch gekennzeichnet, dass** die verwendete Haltezeit beim Heißprägen der zweiten Folie (4') und gegebenenfalls weiterer Folien (5') 0,1-1 sec, vorzugsweise 0,15-0,3 sec, beträgt.

11. Verfahren nach einem der Ansprüche 1 bis 10, **dadurch gekennzeichnet, dass** mindestens die eine Folie ein oder mehrere sekundäre Sicherheitselemente enthält, die aus den folgenden ausgewählt sind:
- eine Schicht, die ein auf Lichtbeugung basierendes Phänomen vorsieht;
- fluoreszierende Sicherheitselemente, vorzugsweise mono-, bi-, trifluoreszenze Pigmente und Pigmentgemische;
- Anti-Stokes-Pigmente;
- infrarot-fluoreszenze Elemente;
- irisierende Pigmente, Metallglanzpigmente, Pigmente, die ihre Farbe je nach Beleuchtungs- und Blickrichtung ändern;
- photochrome und thermochrome Pigmente.

12. Sicherheitsdokument (1, 1'), das ein unter Verwendung von Heißprägen erzeugtes Sicherheitselement enthält, **dadurch gekennzeichnet, dass** das Sicherheitselement mit dem Verfahren nach einem der Ansprüche 1 bis 11 erzeugt wird.

## Revendications

1. Procédé de création d'éléments de sécurité contenant une feuille sur des documents de sécurité (1, 1') avec un marquage à chaud, dans lequel une première feuille (3, 3') est appliquée sur un document de sécurité (1, 1') au moyen d'un marquage à chaud, et sur lequel une seconde feuille (4, 4') qui le chevauche partiellement est également appliquée avec un marquage à chaud, et éventuellement un ou plusieurs autres feuilles (5') chevauchant partiellement au moins l'une des feuilles précédentes sont également appliquées au moyen d'un marquage à chaud, **caractérisé en ce que** la précision de registre, c'est-à-dire la limite de tolérance avec laquelle les deux feuilles ou plus sont positionnés l'un par rapport à l'autre, utilisée au cours du procédé est de +/- 0,4 mm.

2. Procédé selon la revendication 1, **caractérisé en ce que** la précision de registre est de +/- 0,2 mm.

3. Procédé selon la revendication 1 ou 2, **caractérisé en ce qu'**au moins la feuille présente au moins cinq couches, lesquelles cinq couches dans la direction de l'outil de marquage à la surface du document de sécurité devant être fourni avec un élément de sécurité sont les suivantes : une couche de polyester, une couche de séparation, une couche de protection transparente (33, 43, 33', 43', 53'), une couche métallisée (32, 42, 32', 42', 52') et une couche adhésive (31, 41, 31', 41', 51').

4. Procédé selon la revendication 3, **caractérisé en ce que** la couche adhésive (41', 51') de la seconde et/ou des autres feuilles (4', 5') contient 0,1 à 2 g/m² de dibenzoate de 1,4-cyclohexanediméthanol, de préférence 0,3 à 0,6 g/m² de dibenzoate de 1,4-cyclohexanediméthanol.

5. Procédé selon l'une quelconque des revendications 1 à 4, **caractérisé en ce que** la température de marquage à chaud pendant le marquage à chaud de la première feuille (3, 3') est comprise entre 140 et 200°C, de préférence entre 160 et 180°C.

6. Procédé selon l'une quelconque des revendications 1 à 5, **caractérisé en ce que** la température de marquage à chaud pendant le marquage à chaud de la seconde feuille (4') et éventuellement des autres feuilles (5') est comprise entre 60 et 100°C, de préférence entre 75 et 85°C.

7. Procédé selon l'une quelconque des revendications 1 à 6, **caractérisé en ce que** la pression utilisée pendant le marquage à chaud de la première feuille (3, 3') est comprise entre 100 et 220 bar, de préférence 120 et 160 bar.

8. Procédé selon l'une quelconque des revendications 1 à 7, **caractérisé en ce que** la pression utilisée pendant le marquage à chaud de la seconde feuille (4') et éventuellement des autres feuilles (5') est comprise entre 10 et 50 bar, de préférence 25 et 35 bar.

9. Procédé selon l'une quelconque des revendications 1 à 8, **caractérisé en ce que** le temps de maintien utilisé pendant le marquage à chaud de la première feuille (3, 3') est de 0,1 à 2 sec, de préférence 0,3 à 0,6 sec.

10. Procédé selon l'une quelconque des revendications 1 à 9, **caractérisé en ce que** le temps de maintien utilisé pendant le marquage à chaud de la seconde feuille (4') et éventuellement des autres feuilles (5') est de 0,1 à 1 sec, de préférence 0,15 à 0,3 sec.

11. Procédé selon l'une quelconque des revendications 1 à 10, **caractérisé en ce qu'**au moins la feuille contient un ou plusieurs éléments de sécurité secondaires choisis parmi les suivants :
• une couche produisant un phénomène basé sur la diffraction de la lumière ;
• les éléments de sécurité fluorescents, de préférence les pigments mono-, bi-, tri-fluorescents et les mélanges de pigments ;
• les pigments anti-Stokes ;
• les éléments fluorescents infrarouges ;
• les pigments iridescents, les pigments à éclat métallique, les pigments qui changent de couleur suivant la direction de l'éclairage et de la visualisation ;
• les pigments photochromiques et thermochromiques.

12. Document de sécurité (1, 1') contenant un élément de sécurité créé avec un marquage à chaud, **caractérisé en ce que** l'élément de sécurité est créé avec le procédé selon l'une quelconque des revendications 1 à 11.
